(19) **Europäisches Patentamt / European Patent Office / Office européen des brevets**

(11) **EP 4 737 712 A1**

(12) **EUROPEAN PATENT APPLICATION**
published in accordance with Art. 153(4) EPC

(43) Date of publication:
06.05.2026 Bulletin 2026/19

(21) Application number: 23943366.7

(22) Date of filing: 01.12.2023

(51) International Patent Classification (IPC):
F03D 13/20 (2016.01)     F03D 13/25 (2016.01)
E02D 27/42 (2006.01)     B63B 35/44 (2006.01)
B63B 39/00 (2006.01)     B63B 39/14 (2006.01)
B63B 43/04 (2006.01)

(52) Cooperative Patent Classification (CPC):
Y02E 10/72; Y02E 10/727

(86) International application number:
PCT/CN2023/135935

(87) International publication number:
WO 2025/000890 (02.01.2025 Gazette 2025/01)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 30.06.2023 CN 202310818984

(71) Applicants:
• GOLDWIND SCIENCE & TECHNOLOGY CO., LTD.
Xinjiang 830026 (CN)
• Zhejiang Goldwind Science & Technology Co., Ltd.
Wenzhou, Zhejiang 325026 (CN)

(72) Inventors:
• ZHAI, Endi
Beijing 100176 (CN)
• GAO, Yang
Beijing 100176 (CN)
• MA, Shengjun
Beijing 100176 (CN)

(74) Representative: Hoffmann Eitle
Patent- und Rechtsanwälte PartmbB
Arabellastraße 30
81925 München (DE)

(54) **FLOATING SUPPORTING FOUNDATION, WIND TURBINE GENERATOR, AND CONTROL METHOD**

(57) The present application relates to a floating support foundation, a wind turbine, and a control method. The floating support foundation includes: a floating main body including n floating columns spaced apart around a first axis and connecting bodies connecting every adjacent two of the floating columns, n≥3, the n floating columns including one first floating column and n-1 second floating columns, and the first floating column being used for supporting the tower; stabilization devices, each of the second floating columns being connected to a respective one of the stabilization devices, the stabilization device including a drive assembly, a first impeller, and a base connected to the second floating column, the base having an inner cavity, and a first opening and a second opening communicating with the inner cavity, the first opening, the inner cavity, and the second opening forming a flow channel for the seawater, the first impeller being disposed in the inner cavity, the drive assembly driving the first impeller to rotate and causing the seawater to flow within the flow channel, so as to adjust the second floating column connected to the stabilization device to float upward or sink downward. The present application has a simple structure and relatively low cost.

EP 4 737 712 A1

**Fig. 3**

**Description**

**CROSS-REFERENCE TO RELATED APPLICATIONS**

The present application claims priority to Chinese Patent Application No. 202310818984.3 filed on June 30, 2023, which is hereby incorporated by reference in its entirety.

**TECHNICAL FIELD**

The present application relates to the technical field of wind power, and in particular, to a floating support foundation, a wind turbine, and a control method.

**BACKGROUND**

The wind power industry continues to contribute to the achievement of dual carbon goals. Currently, wind turbines are developing towards larger single-unit capacity, lighter overall weight, intelligence, and oceanization. Statistics show that the cumulative installed capacity of offshore wind power is increasing year by year. With the large-scale development of nearshore resources, the development and utilization of deep-sea resources are attracting much attention. In this business scenario, floating wind turbines are gradually developing and will become a major force in subsequent offshore wind power.

The floating support foundation is used to support components such as a tower and a nacelle of a floating wind turbine. Under a condition that the wind turbine faces loads such as wind, waves, ocean currents, and ice, from the perspective of overall dynamics, due to the "floating" characteristic of the floating wind turbine, the floating support foundation has full six degrees of freedom. Under the interwoven and coupled effects of the randomness of external loads and the complexity of the wind turbine's own motion, the nonlinear characteristics of the entire floating wind turbine become more complex. The motion stability of the floating wind turbine is one of the most important indicators for ensuring the continuous, stable, safe, and efficient power output and power generation of the wind turbine. Therefore, how to ensure the stability of the floating wind turbine is one of the problems urgently needing solution in the wind power field.

In related art, the floating support foundation mainly adjust the overall tilt angle of the floating support foundation by controlling the mutual flow of fluid between different floating columns, thereby ensuring the stability of the floating wind turbine where the floating support foundation is located. However, this design approach makes the overall structure of the floating support foundation complex and costly.

**SUMMARY**

Embodiments of the present application provide a floating support foundation, a wind turbine, and a control method. The floating support foundation has a simple structure and relatively low cost.

In one aspect, an embodiment of the present application provides a floating support foundation capable of being disposed in seawater and used to support a tower, wherein the floating support foundation includes: a floating main body including n floating columns spaced apart around a first axis and connecting bodies connecting every adjacent two of the floating columns, n≥3, the n floating columns including one first floating column and n-1 second floating columns, and the first floating column being used for connecting and supporting the tower; stabilization devices, each of the second floating columns being connected to a respective one of the stabilization devices, the stabilization device including a drive assembly, a first impeller, and a base connected to the second floating column, the base having an inner cavity, and a first opening and a second opening communicating with the inner cavity, the first opening, the inner cavity, and the second opening forming a flow channel for the seawater, the first impeller being disposed in the inner cavity, the drive assembly driving the first impeller to rotate and causing the seawater to flow within the flow channel, so as to adjust the second floating column connected to the stabilization device to float upward or sink downward.

In another aspect, an embodiment of the present application provides a wind turbine including: the aforementioned floating support foundation; and a wind turbine main body disposed on the first floating column, the wind turbine main body including a tower connected to the first floating column, a nacelle disposed on the tower, and a wind rotor disposed on the nacelle.

According to another aspect of the embodiment of the present application, the wind turbine further includes a controller configured to: acquire current power information of the wind turbine; under a condition that the current power information continuously exceeds a first threshold for a preset period of time, acquire tilt angle information of the floating support foundation; under a condition that the tilt angle information exceeds a preset range, determine rotation direction information of the first impeller of the stabilization device based on an incoming wind direction; control the drive assembly to drive the first impeller to rotate according to the rotation direction information, so as to adjust the tilt angle information of the floating support foundation to the preset range.

In yet another aspect, an embodiment of the present application provides a control method for the wind turbine as described above, including: acquiring current power information of the wind turbine; under a condition that the current power information continuously exceeds a first threshold for a preset period of time, acquiring tilt angle information of the floating support foundation; under a condition that the tilt angle information exceeds a preset range, determining rotation direction information of the first impeller of the stabilization device based on an incoming wind direction; controlling the drive assembly to drive the first impeller to rotate according to the rotation direction information, so as to adjust the tilt angle information of the floating support foundation to the preset range.

According to the floating support foundation, the wind turbine, and the control method provided by the embodiments of the present application, the floating support foundation includes the floating main body and stabilization devices. The floating main body includes n floating columns. The n floating columns are spaced apart around the first axis, and adjacent two of the floating columns are connected by the connecting body, so that the floating main body has good integrity and high strength. One of the n floating columns is the first floating column used to support the tower, and the rest of the n floating columns are the second floating columns used to cooperate with the first floating column to support the tower. Since each second floating column is connected to a stabilization device, and the stabilization device includes a drive assembly, a first impeller, and a base connected to the second floating column, the base has an inner cavity and a first opening and a second opening communicating with the inner cavity, the first opening, the inner cavity, and the second opening form a flow channel for the seawater, and the first impeller is disposed in the inner cavity, by driving the first impeller to rotate via the drive assembly and causing the seawater to flow within the flow channel, the corresponding second floating column can be adjusted to float upward or sink downward under the action of the flowing seawater, thereby enabling attitude adjustment of the entire floating support foundation and ensuring the power generation efficiency of the wind turbine. Moreover, by arranging the stabilization device in the above structural form to achieve attitude adjustment, each second floating column can be adjusted independently without the need for connecting pipes, valve groups, etc., between them, resulting in a simple structure and low cost. At the same time, it can be achieved simply by controlling the rotation of the first impeller, thereby offering a fast response.

## BRIEF DESCRIPTION OF THE DRAWINGS

Fig. 1 is a schematic structural diagram of a wind turbine according to an embodiment of the present application;
Fig. 2 is a schematic diagram of degrees of freedom of motion of a floating support foundation according to an embodiment of the present application;
Fig. 3 is a schematic structural diagram of a floating support foundation according to an embodiment of the present application;
Fig. 4 is a schematic structural diagram of a second floating column cooperating with a stabilization device according to an embodiment of the present application;
Fig. 5 is a schematic structural diagram of a second floating column cooperating with a stabilization device according to another embodiment of the present application;
Fig. 6 is a flowchart of a control method according to an embodiment of the present application;
Fig. 7 is a control logic diagram of a control method according to an embodiment of the present application;
Figs. 8 to 11 are schematic diagrams of different incoming wind directions according to an embodiment of the present application.

100 - wind turbine main body; 10 - tower; 20 - nacelle; 30 - generator; 40 - wind rotor; 41 - hub; 42 - blade; 50 - mooring system; 60 - seabed;
200 - floating support foundation;
210 - floating column; 211 - first floating column; 212 - second floating column; 212a - second upper floating column; 212b - second lower floating column; 2121 - bottom wall; 2122 - hollow cavity;
220 - connecting body;
300 - stabilization device;
310 - base; 311 - end wall; 312 - side wall; 310a - inner cavity; 310b - first opening; 310c - second opening;
320 - drive assembly; 321 - drive motor; 322 - gearbox; 323 - drive shaft; 324 - rotor; 325 - stator;
330 - first impeller; 331 - first hub; 332 - first blade;
340 - flow straightening member; 341 - second hub; 342 - second blade;
W - first direction.

## DETAILED DESCRIPTION

Features and exemplary embodiments of various aspects of the present application will be described in detail below. In the following detailed description, numerous specific details are set forth to provide a thorough understanding of the present application. However, it will be apparent to those skilled in the art that the present application may be practiced without some of these specific details. The description of the embodiments is merely intended to provide a better understanding of the present application by illustrating examples thereof. In the drawings and the following description, at least some of the well-known structures and techniques are not shown to avoid unnecessary obscuring of the present application; and, for clarity, the dimensions of some structures may be exaggerated. Furthermore, the features, structures, or characteristics described below may be combined in any suitable manner in one or more embodiments.

The directional terms appearing in the following description refer to the directions shown in the drawings, and are not intended to limit the specific structure of the floating support foundation, the wind turbine, and the control method of the present application. In the description of the present application, it should be noted that, unless otherwise explicitly specified and defined, the terms "mounted", "connected" should be understood broadly, for example, they may be fixed connections, detachable connections, or integral connections; and they may be direct connections or indirect connections. Those of ordinary skill in the art can understand the specific meanings of the above terms in the present application based on the specific circumstances.

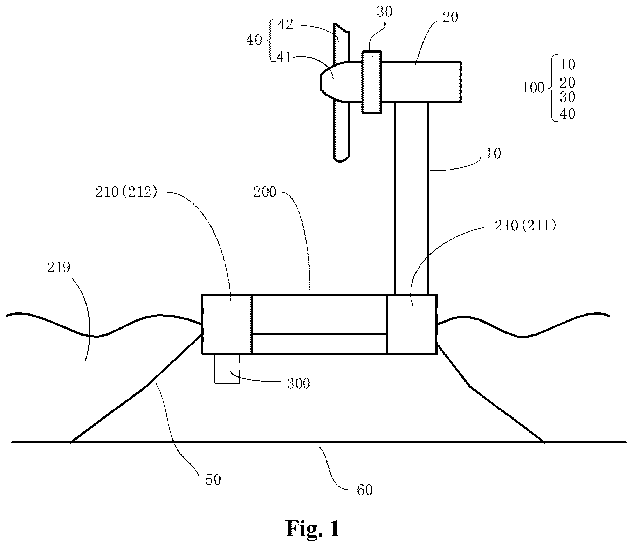

As shown in Fig. 1, an embodiment of the present application provides a wind turbine, including a floating support foundation 200 and a wind turbine main body 100. The wind turbine main body 100 includes a tower 10, a nacelle 20, a generator 30, and a wind rotor 40. The tower 10 is connected to the floating support foundation 200, the nacelle 20 is disposed at the top end of the tower 10, and the generator 30 is disposed in the nacelle 20. In some examples, the generator 30 may be located outside the nacelle 20. Of course, in some examples, the generator 30 may also be located inside the nacelle 20. The wind rotor 40 includes a hub 41 and a plurality of blades 42 connected to the hub 41. The wind rotor 40 is connected to the rotor of the generator 30 via the hub 41, thereby driving the rotor to rotate relative to the stator to meet the power generation requirements of the wind turbine. The floating support foundation 200 floats in the seawater, and in order to limit the motion range thereof, the floating support foundation 200 is fixed to the seabed 60 via a mooring system 50, achieving constrained motion within a certain range.

Since the floating wind turbine is significantly different from the onshore wind turbine and the offshore monopile fixed wind turbine, in terms of the overall system composition, the floating wind turbine has its unique float body and mooring system.

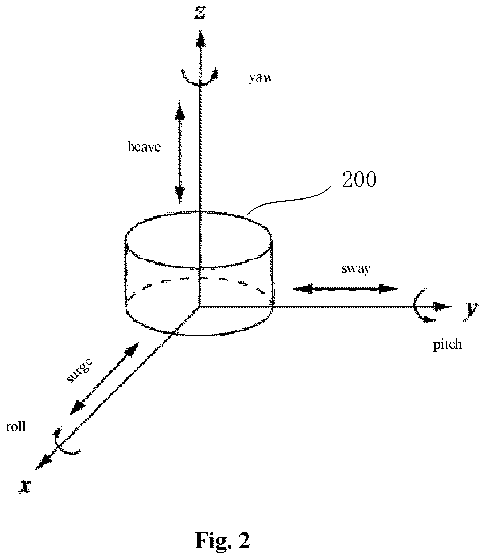

As shown in Fig. 2, in terms of external loads, the entire floating support foundation 200 faces loads such as wind, waves, ocean currents, and ice. In terms of overall dynamics, due to the "floating" characteristic of the floating wind turbine, the floating support foundation and the wind turbine in which the floating support foundation is located have full six degrees of freedom. The three translational degrees of freedom include: surge, sway, and heave. The three rotational degrees of freedom include: roll, pitch, and yaw. Under the combined action of random external load inputs and multi-system coupling of the wind turbine, the motion characteristics and mechanisms of the floating wind turbine become more complex.

Continuing to refer to Fig. 2, the motion stability of the floating wind turbine is one of the most important indicators for ensuring the continuous, stable, safe, and efficient power output and power generation of the wind turbine. However, while the wind rotor captures wind energy to generate rotational mechanical energy, it simultaneously generates thrust in the same direction as the incoming wind. This force is transmitted to the floating support foundation 200, causing the wind turbine to produce an elevation angle in the y rotational direction in Fig. 2, resulting in an angle between the wind rotor of the wind turbine and the incoming wind direction. According to formula (1), the power generation P is proportional to A, and the existence of the elevation angle will reduce A, leading to a decrease in the power generation of the wind turbine.

$$P = \frac{1}{2}\rho AV^3 \tag{1}$$

In order to improve the stability of the floating wind turbine, the related art proposes a ballast control system for a floating wind turbine platform (i.e., a floating support foundation). This system consists of multiple internal volume stabilizing columns for accommodating ballast (water), and a control system, etc. Based on the incoming wind and the attitude of the wind turbine, the ballast water among the multiple stabilizing columns is coordinated and controlled, thereby making the wind rotor of the wind turbine face the wind and reducing power generation loss. It can control the attitude of the floating wind turbine, thereby optimizing the overall power generation.

However, during implementation and application, although this structural form of the floating support foundation can improve the stability of the floating wind turbine to a certain extent, it relies on the incoming wind speed and the attitude of the wind turbine to achieve the mutual linkage and adjustment of ballast water among the multiple internal volume stabilizing columns for accommodating ballast (water), requiring supporting hardware such as huge pump sets (thousands of cubic meters per hour), pipelines, valves, etc. On the one hand, this makes the structure complex; on the other hand, the requirements for system reliability and redundancy design are very high. Once any component in this system fails, it will affect the performance and safety of the entire unit, and the cost is high.

At the same time, from another dimension, achieving ballast water adjustment among different stabilizing columns through pump sets and pipelines is particularly slow, generally between half an hour and one hour. The response speed of the system determines that the wind turbine cannot match the incoming wind and wave loads in the optimal attitude in most scenarios.

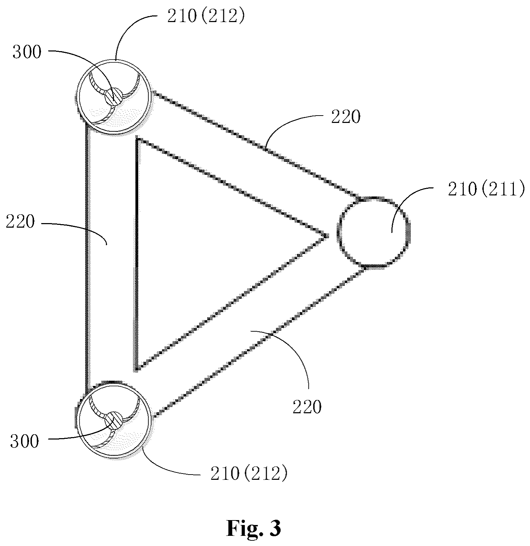

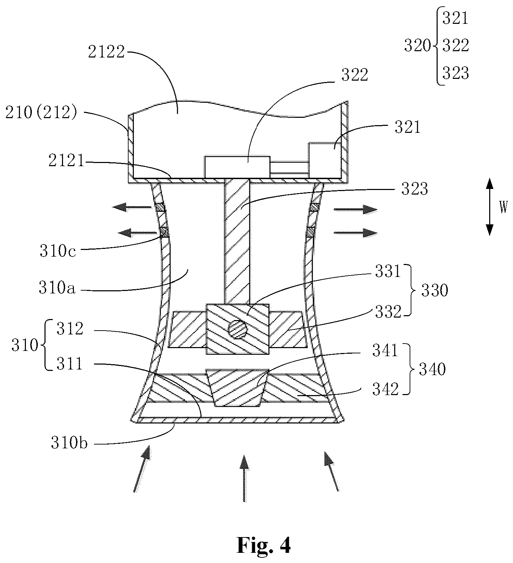

As shown in Fig. 3 and Fig. 4, based on this, an embodiment of the present application provides a new floating support foundation 200 capable of being disposed in seawater and used to support a tower 10. The floating support foundation 200 includes a floating main body and stabilization devices 300. The floating main body includes n floating columns 210 spaced apart around a first axis and connecting bodies 220 connecting every adjacent two of the floating columns 210, where n≥3. The n floating columns 210 include one first floating column 211 and n-1 second floating columns 212, and the first floating column 211 is used for connecting and supporting the tower 10. Each second floating column 212 is connected to a respective one of the stabilization devices 300. The stabilization device 300 includes a drive assembly 320, a first impeller 330, and a base 310 connected to the second floating column 212. The base 310 has an inner cavity 310a, and a first opening 310b and a second opening 310c communicating with the inner cavity 310a. The first opening 310b, the inner cavity 310a, and the second opening 310c form a flow channel for the seawater. The first impeller 330 is disposed in the inner cavity 310a. The drive assembly 320 drives the first impeller 330 to rotate and causes the seawater to flow within the flow channel, so as to adjust the second floating column 212 connected to the stabilization device 300 to float upward or sink downward.

The value of n can be 3, 4, 5, or even more. The connecting lines between centers of the floating columns 210 as a whole can form a triangle, quadrilateral, pentagon, etc., optionally a regular polygon. The centers of the floating columns 210 are located at the vertices of the polygon.

Exemplarily, under a condition that n=3, the connecting lines between centers of the floating columns 210 form a triangle, optionally an equilateral triangle. Under a condition that n=4, the connecting lines between centers of the floating columns 210 form a quadrilateral, optionally a square. Under a condition that n=5, the connecting lines between centers of the floating columns 210 form a pentagon, optionally a regular pentagon.

Each floating column 210 as a whole can be cylindrical. In the direction perpendicular to the sea surface, or in the extension direction of the tower 10, the shape of the orthographic projection of the floating column 210 can be a regular geometric shape. The connecting lines between centers of the floating columns 210 forming a polygon can also be understood as the connecting lines between centers of the orthographic projections of the floating columns 210 forming a polygon.

Optionally, the shape of the orthographic projection of the floating column 210 in the direction perpendicular to the sea surface can be circular, elliptical, or polygonal. Under a condition that the shape is polygonal, it is optionally a regular polygon.

The sea surface can be understood as the surface of the seawater when it is calm and unaffected by wind and waves.

The connecting body 220 can be in the form of a connecting rod, a connecting plate, etc. Adjacent two of the floating columns 210 can be connected by the connecting body 220. The connection between the connecting body 220 and the floating column 210 can be achieved by fasteners or can be an integral structure.

The n floating columns 210 can be uniformly spaced apart around the first axis. Every adjacent two of the floating columns 210 can be connected by the connecting body 220, and the extension lengths of the connecting bodies 220 between adjacent floating columns 210 can be equal.

The first impeller 330 is disposed in the inner cavity 310a of the base 310 and can have rotational freedom relative to the base 310 without interfering with the side wall 312 of the base 310. The drive assembly 320 can be disposed in the inner cavity 310a and connected to the base 310. Of course, the drive assembly 320 can also be partially disposed in the floating column 210, which can also ensure the driving of the first impeller 330.

The stabilization device 300 can be disposed on a side of the second floating column 212 in the first direction W. The first opening 310b and the second opening 310c can have a height difference in the first direction W. The seawater can drive the second floating column 212 to float upward or sink downward in the first direction W when flowing. The first direction W is optionally the axial direction of the second floating column 212.

The base 310 of the stabilization device 300 can be a closed cylindrical structure body, or of course, a cylindrical structure body with an opening, with the opening closed by the bottom wall 2121 of the second floating column 212 connected to the base 310.

The floating support foundation 200 provided by the embodiment of the present application includes the floating main body with n floating columns 210. The n floating columns 210 are spaced apart around the first axis, and adjacent two of the floating columns 210 are connected by connecting body 220, so that the floating main body has good integrity and high strength. One of the n floating columns 210 is the first floating column 211 used to support the tower 10, and the rest of the n floating columns 210 are the second floating columns 212 used to cooperate with the first floating column 211 to support the tower 10. Since each second floating column 212 is connected to a stabilization device 300, and the stabilization device 300 includes a drive assembly 320, a first impeller 330, and a base 310 connected to the second floating column 212, the base 310 has an inner cavity 310a and a first opening 310b and a second opening 310c communicating with the inner cavity 310a, the first opening 310b, the inner cavity 310a, and the second opening 310c form a flow channel for the seawater, and the first impeller 330 is disposed in the inner cavity 310a, by driving the first impeller 330 to rotate via the drive assembly 320 and causing the seawater to flow within the flow channel, the corresponding second floating column 212 can be adjusted to float upward or sink downward under the action of the flowing seawater, thereby enabling attitude adjustment of the entire floating support foundation 200 and ensuring the power generation efficiency of the wind turbine.

Moreover, by arranging the stabilization device 300 in the above structural form to achieve attitude adjustment, each second floating column 212 can be adjusted independently without the need for connecting pipes, valve groups, etc., between them, resulting in a simple structure and low cost.

At the same time, when external factors such as incoming wind cause the floating support foundation 200 to produce a tilt angle, the floating support foundation 200 provided by the embodiment of the present application only requires controlling the first impeller 330 of the stabilization device 300 at the corresponding position to rotate to achieve attitude adjustment, with instantaneous response, and the following situation can be avoided: waiting for half an hour to an hour, and the response speed of the system determines that the wind turbine cannot match the incoming wind and wave loads in the optimal attitude in most scenarios. Therefore, the power generation efficiency of the wind turbine where the floating support foundation 200 is located can be guaranteed.

In some optional embodiments, the base 310 as a whole is cylindrical. The base 310 has an end wall 311 disposed opposite to the bottom wall 2121 of the second floating column 212 in the first direction W and a side wall 312 disposed surrounding the end wall 311. The end wall 311 and the side wall 312 enclose and form the inner cavity 310a. The bottom wall 2121 closes the inner cavity 310a. The first opening 310b is disposed on the end wall 311. The second opening 310c is disposed on the bottom wall 2121.

The end wall 311 and the bottom wall 2121 are spaced apart in the first direction W, and the planes where the end wall 311 and the bottom wall 2121 are located can intersect, and can optionally parallel to each other.

The side wall 312 is hollow. One end of the side wall 312 in the first direction W is closed by the end wall 311, and the other end of the side wall 312 is closed by the bottom wall 2121 of the second floating column 212 connected to the side wall 312.

The number of the first openings 310b can be one, or of course, two or more. Under a condition that there are two or more first openings 310b, the two or more first openings 310b are spaced apart. Correspondingly, the number of the second openings 310c can be one, or of course, two or more. Under a condition that there are two or more second openings 310c, the two or more second openings 310c can be spaced apart around the periphery of the side wall 312.

According to the floating support foundation 200 provided by the embodiment of the present application, the base 310 adopting the above form has a simple structure and can enclose a relatively independent space for the first impeller 330, so that during the rotation of the first impeller 330, it can guide the seawater, guiding the seawater to flow between the first opening 310b and the second opening 310c, ensuring the floating or sinking requirements of the second floating column 212 connected to the base 310, and thereby reliably ensuring the attitude adjustment requirements of the floating support foundation 200 and the tower it supports.

In some optional embodiments, in the floating support foundation 200 provided by the embodiment of the present application, connecting lines between centers of the floating columns 210 as a whole form a regular polygon, and the base 310 of each stabilization device 300 is coaxially disposed with the second floating column 212 connected to the stabilization device 300.

That is, the center of the first floating column 211 and the centers of the second floating columns 212 are distributed around the first axis, such that the connecting lines between adjacent centers as a whole form a regular polygon.

For example, under a condition that n=3, with one first floating column 211 and two second floating columns 212, the connecting lines between centers of the two second floating columns 212 and the one first floating column 211 as a whole form an equilateral triangle.

For another example, under a condition that n=4, with one first floating column 211 and three second floating columns 212, the connecting lines between centers of the three second floating columns 212 and the one first floating column 211 as a whole form a square. By analogy, under a condition that n=5, the connecting lines between centers of the floating columns 210 form a regular pentagon. The specific distribution pattern can be set according to the value of n and will not be listed here.

According to the floating support foundation 200 provided by the embodiment of the present application, by the connecting lines between centers of the floating columns 210 as a whole forming a regular polygon, and the base 310 of each stabilization device 300 being coaxially disposed with the second floating column 212 connected to the stabilization device 300, a fast response for the floating or sinking of each second floating column 212 in the first direction W or the axial direction of the second floating column 212 can be guaranteed. Moreover, the connecting lines between centers forming a regular polygon can ensure the overall stability of the floating body and improve the safety performance of the floating support foundation 200.

In some optional embodiments, according to the floating support foundation 200 provided by the embodiment of the present application, along the first direction W, a radial dimension of the side wall 312 first decreases and then increases.

That is, the side wall 312 can be waist-drum-shaped or dumbbell-shaped.

According to the floating support foundation 200 provided by the embodiment of the present application, through the above setting, it is beneficial for the seawater to be guided upwards or downwards along the first direction W, ensuring the attitude adjustment requirements for the second floating column 212.

In some optional embodiments, according to the floating support foundation 200 provided by the embodiment of the present application, the drive assembly 320 can include a motor and a drive shaft 323. The motor is connected to at least one of the base 310 and the second floating column 212, and the motor can be directly or indirectly connected to the drive shaft 323. The first impeller 330 is connected to the drive shaft 323. The motor can be a direct drive motor or a doubly-fed motor, etc.

The drive assembly 320 adopting the above form can ensure the driving requirements for the first impeller 330, and has a simple and compact structure, facilitating installation.

In some optional embodiments, according to the floating support foundation 200 provided by the embodiment of the present application, the drive assembly 320 includes a drive motor 321, a gearbox 322, and a drive shaft 323, an input end of the gearbox 322 is connected to the drive motor 321 and an output end of the gearbox 322 is connected to the drive shaft 323, and the first impeller 330 is connected to the drive shaft 323.

The gearbox 322 can adopt multi-stage speed change. The gearbox 322 is connected between the drive motor 321 and the drive shaft 323, so that the kinetic energy of the drive motor 321 can be transmitted to the drive shaft 323 through the gearbox 322. Through the gearbox 322, the output speed of the drive motor 321 can be increased or decreased before being transmitted to the drive shaft 323, ensuring the driving requirements for the drive shaft 323.

The axis of the drive shaft 323 and the axis of the drive motor 321 can intersect, or of course, be parallel. Under a condition that the axis of the drive shaft 323 and the axis of the drive motor 321 intersect, directional change can be achieved specifically through the gearbox 322, or an additional directional change structure can be set to ensure the transmission of kinetic energy.

According to the floating support foundation 200 provided by the embodiment of the present application, the drive assembly 320 adopting the above form can ensure the driving requirements for the first impeller 330. Moreover, it can allow the first impeller 330 to obtain a higher speed, improving the response rate of the floating support foundation 200 during attitude adjustment.

According to the floating support foundation 200 provided by the embodiment of the present application, the drive assembly 320 can be entirely located within the inner cavity 310a of the base 310, and the drive motor 321 and the gearbox 322 can be supported through a structure such as a set mounting frame. Of course, this is an optional embodiment.

In some optional embodiments, according to the floating support foundation 200 provided by the embodiment of the present application, the second floating column 212 has a hollow cavity 2122, the drive motor 321 and the gearbox 322 are located within the hollow cavity 2122, the drive shaft 323 is inserted through the bottom wall 2121 of the second floating column 212 and connected to the output end of the gearbox 322, and the drive shaft 323 is in dynamic sealing cooperation with the bottom wall 2121.

The drive motor 321 and the gearbox 322 can both be supported by the bottom wall 2121.

Dynamic sealing can be understood as: a sealing between relatively moving parts in a machine (or an equipment), that is, the two components can move relative to each other while ensuring sealing between them.

According to the floating support foundation 200 provided by the embodiment of the present application, by providing the second floating column 212 with the hollow cavity 2122, installation space can be provided for the drive motor 321 and the gearbox 322, reducing the occupied space of the base 310 and reducing the volume of the base 310. Moreover, the drive motor 321 and the gearbox 322 can provide a certain weight for the second floating column 212, giving it a certain ballast effect and ensuring the stability of the second floating column 212.

By having the drive shaft 323 in dynamic sealing cooperation with the bottom wall 2121, it can not only ensure the rotational requirements of the drive shaft 323, meeting the driving of the first impeller 330, but also the dynamic sealing cooperation can ensure the sealing performance of the hollow cavity 2122 of the second floating column 212, preventing seawater from entering and causing corrosion of the second floating column 212, flooding of the generator and gearbox, and even affecting the weight of the second floating column 212, etc.

In some optional embodiments, according to the floating support foundation 200 provided by the embodiment of the present application, the first impeller 330 includes a first hub 331, a plurality of first blades 332, and a pitch system. The first hub 331 is connected to the drive assembly 320. The plurality of first blades 332 are spaced apart around the circumference of the first hub 331 and connected to the first hub 331 through the pitch system, so as to adjust a pitch angle of the first blades 332.

The structural form of the pitch system can adopt the pitch form of the wind rotor of the wind turbine. By changing the pitch angle between the first blade 332 and the first hub 331, the angle of attack of the fluid on the first blade 332 is changed.

According to the floating support foundation 200 provided by the embodiment of the present application, by the first impeller 330 including the first blades 332 and the first hub 331, and at the same time the first blades 332 and the first hub 331 being rotatably connected through the pitch system, the pitch angle of the first blades 332 are adjustable, thereby changing the interaction force with the seawater to control the torque and power captured by the first impeller 330.

Optionally, the pitch system can include a pitch bearing and a power source. The pitch bearing can include an inner ring and an outer ring that rotate in cooperation. One of the inner ring and the outer ring is connected to the first hub 331 and the other is connected to the first blade 332. The power source can cooperate with the pitch bearing and drive the inner ring and the outer ring of the pitch bearing to rotate relative to each other, thereby achieving pitch change. The power source includes but is not limited to the form of an electric motor plus a transmission wheel, which can be consistent with the pitch principle of the hub and blades of a wind turbine.

In some optional embodiments, according to the floating support foundation 200 provided by the embodiment of the present application, the stabilization device 300 further includes a flow straightening member 340 disposed in the inner cavity 310a and connected to the base 310. The flow straightening member 340 is disposed between the first opening 310b and the first impeller 330, so as to straighten a flow direction of the seawater entering from the first opening 310b.

The flow straightening member 340 can be connected to the base 310. The flow straightening member 340 can be a plate with flow straightening holes, or can be in the form of an impeller.

According to the floating support foundation 200 provided by the embodiment of the present application, by further including the flow straightening member 340 in the stabilization device 300, the flow straightening member 340 can be used to adjust the flow direction of the entering seawater, avoiding energy loss caused by the seawater entering from multiple directions and contacting the first impeller 330.

In some optional embodiments, according to the floating support foundation 200 provided by the embodiment of the present application, the flow straightening member 340 includes a second hub 341 and a plurality of second blades 342, the plurality of second blades 342 are spaced apart around a circumference of the second hub 341 and are connected to the second hub 341, an end of the second blade 342 away from the second hub 341 is connected to the base 310, and a flow straightening hole is formed between adjacent two of the second blades 342.

The number of the second blades 342 included in the flow straightening member 340 can be two, three, or more, as long as it can ensure the straightening of the entering seawater and reduce energy loss.

According to the floating support foundation 200 provided by the embodiment of the present application, the flow straightening member 340 adopting the above form can not only meet the straightening requirements for the incoming and outgoing seawater but also has a simple structural form and good straightening effect.

It should be understood that the floating support foundation 200 provided by the various embodiments of the present application described above are all described by taking the drive assembly 320 including components such as the drive motor 321, the gearbox 322, and the drive shaft 323 as examples. These are some optional embodiments and are not limited to the above situations.

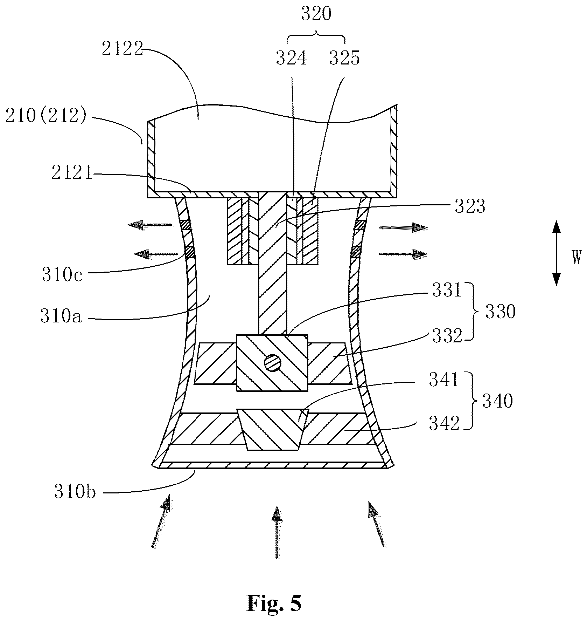

As shown in Fig. 5, in some embodiments, the drive assembly 320 can also include a direct drive motor. The direct drive motor is connected to at least one of the bottom wall 2121 of the second floating column 212 and the base 310, and includes a rotor 324 and a stator 325 that rotate in cooperation. The drive shaft 323 is coaxially disposed with the direct drive motor and connected to the rotor 324.

The direct drive motor can be directly connected to the base 310, or of course, can be connected to the bottom wall 2121 of the second floating column 212. Of course, in order to ensure connection strength, the direct drive motor can also be connected to both the base 310 and the bottom wall 2121.

Optionally, the direct drive motor can be located in the inner cavity 310a of the base 310. Of course, under a condition that the second floating column 212 has a hollow cavity 2122, the direct drive motor can also be located in the hollow cavity 2122. Optionally, it is located in the inner cavity 310a of the base 310.

According to the wind turbine foundation provided by the embodiment of the present application, the drive assembly 320 adopting the above form can also meet the driving requirements for the first impeller 330, thereby ensuring the attitude adjustment requirements of the wind turbine foundation.

It has all the advantages of the floating support foundation 200, which will not be repeated here.

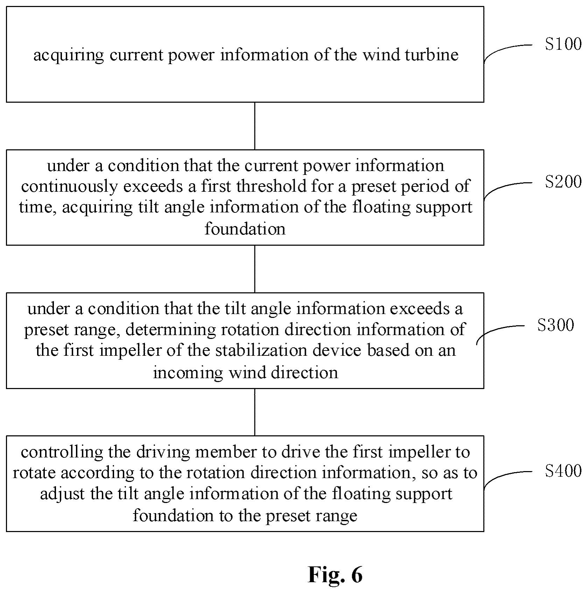

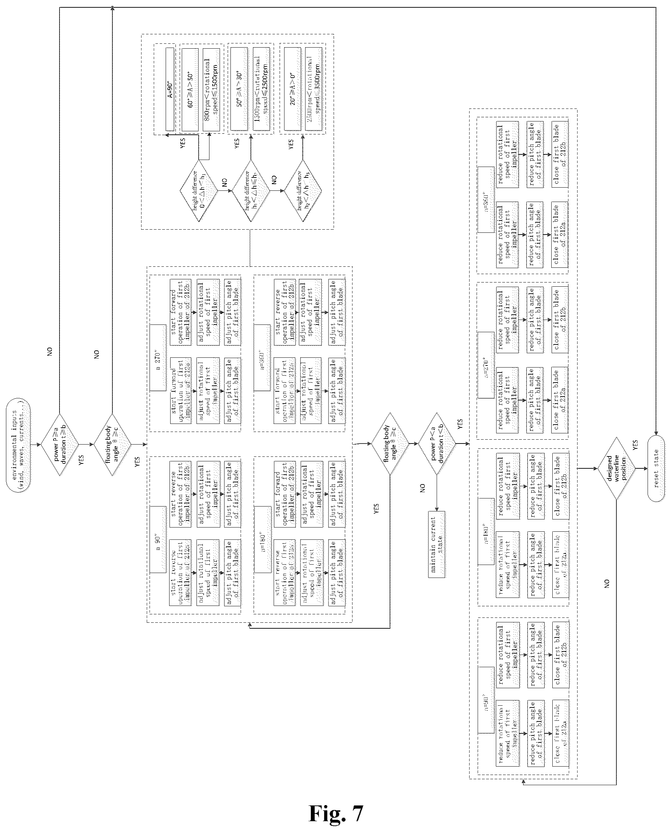

As shown in Fig. 6 and Fig. 7, on the other hand, an embodiment of the present application also provides a control method for the wind turbine as described above, including:

S100: acquiring current power information P of the wind turbine;
S200: under a condition that the current power information continuously exceeds a first threshold for a preset period of time, acquiring tilt angle information of the floating support foundation 200;

S300: under a condition that the tilt angle information exceeds a preset range, determining rotation direction information of the first impeller 330 of the stabilization device 300 based on an incoming wind direction;

S400: controlling the drive assembly 320 to drive the first impeller 330 to rotate according to the rotation direction information, so as to adjust the tilt angle information of the floating support foundation 200 to the preset range.

In step S100, the current power information of the wind turbine can be directly acquired through the main controller of the wind turbine, or can be calculated based on the current rotational speed of the wind turbine.

In step S200, the preset period of time and the first threshold can be set according to the area where the wind turbine is located and the safety level requirements. Exemplarily, the value t of the preset period of time can be b = 20min, and the first threshold m can be 3000kw. Of course, the above are only examples given based on one type of wind turbine and the safety level requirements, and the present application is not limited to the above forms.

In step S300, the attitude of the offshore wind turbine is closely related to the incoming wind and waves. Taking the incoming wind as an example, the different states of the wind rotor of the wind turbine are described. Based on the shape of the floating support foundation 200 and the state of the wind rotor of the wind turbine, the motion attitude of the wind rotor can be defined into four orientations. Different orientations determine the direction of thrust and are strongly correlated with the attitude of the floating support foundation 200. Therefore, the rotation direction information of the first impeller 330 of each stabilization device 300 can be determined based on the direction of the incoming wind and the target attitude information corresponding to a target attitude to which the floating support foundation 200 is to be adjusted. The target attitude can be a horizontal attitude, or an attitude form at a predetermined angle relative to the horizontal attitude.

Exemplarily, the current state of the floating wind turbine, such as mooring tension, weight, floating body bending moment, and buoyancy center information, can first be obtained through wind turbine information. Based on this input, theoretical calculation can be performed to obtain the information of the target attitude, that is, the corresponding gravity center position and buoyancy center position. The adjustment of the two centers can be achieved through the rotation of the first impeller 330 of each stabilization device 300, and the input for implementation needs to be combined with the orientation state of the wind rotor.

In step S400, the drive assembly 320 of the stabilization device 300 connected to each second floating column 212 can be controlled to drive the first impeller 330 to rotate, causing the seawater to flow within the flow channel, thereby driving the connected second floating column 212 to float upward or sink downward, achieving attitude adjustment of the floating support foundation 200.

According to the control method provided by the embodiment of the present application, the stabilization device 300 is connected to the second floating column 212. Through the above step settings, by controlling the rotation of the first impeller 330 of the stabilization device 300 on each second floating column 212, the seawater is driven to flow within the flow channel, achieving actions such as floating and sinking of the second floating column 212, and realizing attitude adjustment of the floating support foundation 200, so that the wind turbine can maintain the optimal output attitude when facing external complex and uncertain loads and its own different operating conditions, thereby ensuring the output of the wind turbine.

In some optional embodiments, according to the control method provided by the embodiment of the present application, the rotation direction information includes forward rotation and reverse rotation.

Under a condition that the first impeller 330 of the stabilization device 300 rotates forward, the stabilization device 300 provides a float upward driving force for the second floating column 212 connected to the stabilization device 300.

Under a condition that the first impeller 330 of the stabilization device 300 rotates in reverse, the stabilization device 300 provides a sink downward driving force for the second floating column 212 connected to the stabilization device 300.

According to the control method provided by the embodiment of the present application, by including forward rotation and reverse rotation in the rotation direction information, and defining the relationship between forward rotation/reverse rotation and floating upward/sinking downward, the rotation direction information can be accurately provided based on the incoming wind direction, ensuring the attitude adjustment requirements of the floating support foundation 200.

In some optional embodiments, according to the control method provided by the embodiment of the present application, the number of the second floating columns 212 is two, that is, n=3. The step of under a condition that the tilt angle information exceeds the preset range, determining the rotation direction information of the first impeller 330 of the stabilization device 300 based on the incoming wind direction includes:

under a condition that the tilt angle information exceeds the preset range, controlling the two stabilization devices 300 to synchronously rotate forward, synchronously rotate in reverse, or one to rotate forward and the other to rotate in reverse, based on an angle between the incoming wind direction and a reference wind direction.

Through the above settings, using the synchronous forward rotation, synchronous reverse rotation, or one forward and one reverse rotation of the stabilization devices 300 meets the attitude adjustment of the floating support foundation 200 under the action of different incoming winds, ensuring the power generation efficiency of the wind turbine connected to the floating support foundation 200.

For better description, the two second floating columns 212 are referred to as the second upper floating column 212a at the top of the figure and the second lower floating column 212b at the bottom of the figure. Connecting bodies 220 connect the first floating column 211 with the second upper floating column 212a and the second lower floating column 212b, as well as between the second upper floating column 212a and second lower floating column 212b.

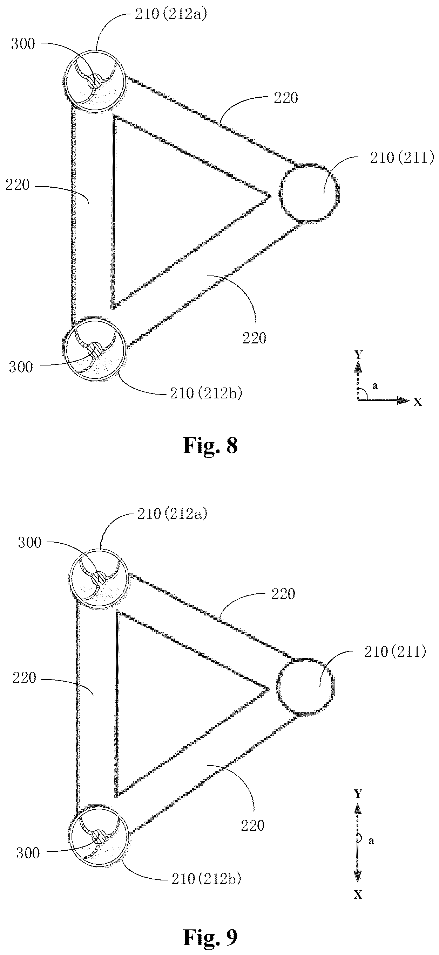

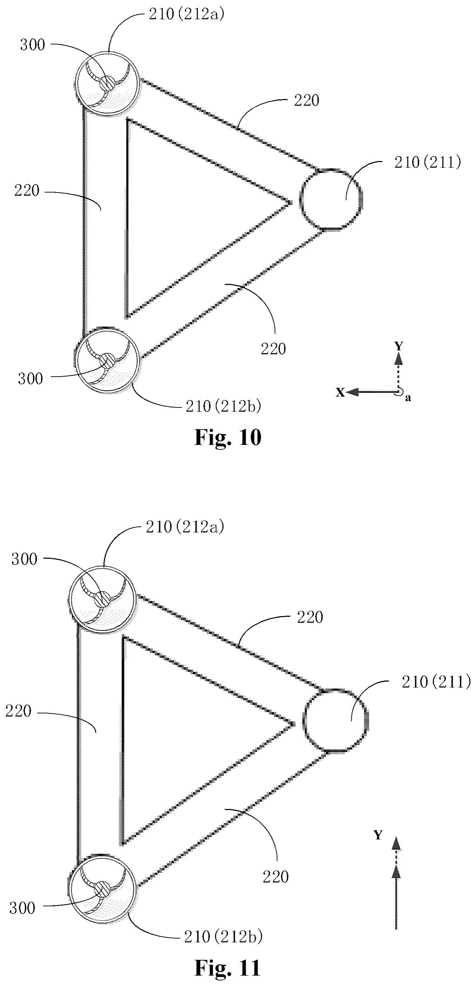

As shown in Fig. 7 to Fig. 11, exemplarily, the tilt angle information includes the tilt angle $\theta$ of the floating body relative to a preset reference plane. Based on the environmental input, the power of the wind turbine and the power generation duration are first determined. Under a condition that the power of the wind turbine $P \geq a$ (e.g., a=3000kW) and the duration $t \geq b$ (e.g., b=20min) are simultaneously satisfied, the tilt angle $\theta$ ($\theta$ can be $\alpha$ roll, $\beta$ pitch, $\gamma$ yaw) can be measured by a combination of tilt angle sensors. Under a condition that this angle $\theta \geq c$ (e.g., c=5°), the stability adjustment calculation module of the floating wind turbine is activated at this time. The stability adjustment calculation module first obtains the current state of the wind turbine through the wind turbine information, such as mooring tension, weight, floating body bending moment, and buoyancy center information; further, based on this input, theoretical calculation can be performed to obtain the information of the target attitude, that is, the corresponding gravity center position and buoyancy center position. The adjustment of the two centers can be achieved through the stabilization devices 300 connected to the two second floating columns 212, and the input for implementation needs to be combined with the orientation state of the wind rotor.

Exemplarily, step S300 can include the following steps.

Under a condition that the tilt angle of the floating support foundation 200 relative to the preset reference plane is greater than a second threshold c, and the angle a between the incoming wind X and the reference wind direction Y is 90°, it can be completed by the coordinated motion of the stabilization devices 300 connected to the second upper floating column 212a and the second lower floating column 212b. At this time, it is necessary to simultaneously activate the stabilization devices of the second upper floating column 212a and the second lower floating column 212b, and control the first blades 332 of the stabilization devices 300 connected to the second upper floating column 212a and the second lower floating column 212b to rotate in reverse, causing the second upper floating column 212a and the second lower floating column 212b to sink downward, so that the tilt angle $\theta$ returns to within the preset threshold range.

Under a condition that the tilt angle of the floating support foundation 200 relative to the preset reference plane is greater than the second threshold c, and the angle a between the incoming wind X and the reference wind direction Y is 180°, it can be completed by the coordinated motion of the stabilization devices 300 connected to the second upper floating column 212a and the second lower floating column 212b. At this time, it is necessary to simultaneously activate the stabilization devices of the second upper floating column 212a and the second lower floating column 212b, and control the first impeller 330 of the stabilization device 300 connected to the second upper floating column 212a to rotate in reverse (causing the second upper floating column 212a to sink downward) and control the first impeller 330 of the stabilization device 300 connected to the second lower floating column 212b to rotate forward (causing the second lower floating column 212b to float upward), so that the tilt angle $\theta$ returns to within the preset threshold range.

Under a condition that the tilt angle of the floating support foundation 200 relative to the preset reference plane is greater than the second threshold c, and the angle a between the incoming wind X and the reference wind direction Y is 270°, it can be completed by the coordinated motion of the stabilization devices 300 connected to the second upper floating column 212a and the second lower floating column 212b. At this time, it is necessary to simultaneously activate the stabilization devices of the second upper floating column 212a and the second lower floating column 212b, and control the first blades 332 of the stabilization devices 300 connected to the second upper floating column 212a and the second lower floating column 212b to rotate forward, causing the second upper floating column 212a and the second lower floating column 212b to float upward, so that the tilt angle $\theta$ returns to within the preset threshold range.

Under a condition that the tilt angle of the floating support foundation 200 relative to the preset reference plane is greater than the second threshold c, and the angle a between the incoming wind X and the reference wind direction Y is 360° or 0°, it can be completed by the coordinated motion of the stabilization devices 300 connected to the second upper floating column 212a and the second lower floating column 212b. At this time, it is necessary to simultaneously activate the stabilization devices of the second upper floating column 212a and the second lower floating column 212b, and control the first impeller 330 of the stabilization device 300 connected to the second upper floating column 212a to rotate forward (causing the second upper floating column 212a to float upward) and control the first impeller 330 of the stabilization device 300 connected to the second lower floating column 212b to rotate in reverse (causing the second lower floating column 212b to sink downward), so that the tilt angle $\theta$ returns to within the preset threshold range.

Under a condition that the angle a between the incoming wind and the reference wind direction is between the above values, the adjustments of the second floating columns 212 corresponding to the two states can be comprehensively considered. By adjusting the rotation direction of the first impellers 330 of the stabilization devices 300 connected to the second floating columns 212, the stabilization devices 300 connected to the second floating columns 212 cooperate and act synergistically to ensure the adjustment of the overall attitude of the floating support foundation 200, keeping the tilt angle within the preset range and ensuring the power generation efficiency of the wind turbine.

In some optional embodiments, according to the floating support foundation 200 provided by the embodiment of the present application, the first impeller 330 includes a first hub 331, a plurality of first blades 332, and a pitch system, the plurality of first blades 332 are spaced apart around a circumference of the first hub 331 and are connected to the first hub 331 through the pitch system, and the control method further includes:

determining at least one of rotational speed information of the first impeller 330 and angle information between the first blade 332 and the first hub 331 based on a height difference between a draft of the second floating column 212 connected to the stabilization device 300 and a set waterline;

controlling the drive assembly 320 to drive the first impeller 330 to rotate based on the at least one of the rotational speed information and the angle information, so as to adjust the tilt angle information of the floating support foundation 200 to the preset range.

Optionally, the set waterline can be understood as a pre-set mark on the second floating column 212, which can be a marked line with an indicator. The draft can be understood as a position line at which the second floating column 212 is immersed relative to the set waterline when the floating support foundation 200 is tilted.

According to the control method provided by the embodiment of the present application, by determining the rotational speed information of the first impeller 330 based on the height difference between the draft of the second floating column 212 connected to the stabilization device 300 and the set waterline, the rotational speed of the first impeller 330 of the stabilization device 300 can be accurately controlled, and the corresponding angle can also be matched between the first blade 332 and the first hub 331, so as to quickly adjust the attitude of the floating support foundation 200 and meet the optimal angle requirements of the wind turbine in which the floating support foundation 200 is located.

Controlling the drive assembly 320 to drive the first impeller 330 to rotate based on at least one of the rotational speed information and the angle information, and controlling the drive assembly 320 to drive the first impeller 330 to rotate based on the rotation direction information can be implemented simultaneously. Of course, the rotation direction can be controlled and adjusted first, and then the rotational speed and the rotation angle can be controlled and adjusted, as long as it ensures the attitude adjustment requirements of the floating support foundation 200.

In some optional embodiments, according to the control method provided by the embodiment of the present application, a rotation angle a of the first blade 332 relative to the first hub 331 satisfies $0° < a \leq 90°$, the step of determining at least one of the rotational speed information of the first impeller 330 and the angle information between the first blade 332 and the first hub 331 based on the height difference between the draft of the second floating column 212 connected to the stabilization device 300 and the set waterline includes:

under a condition that a value range of the height difference H is $0 < H \leq h1$, rotating the first blade 332 relative to the first hub 331 to $a = 90°$, or rotating the first blade 332 relative to the first hub 331 to $50° < a \leq 60°$, with a rotational speed of the first impeller 330 being 800rpm-1500rpm;

under a condition that the value range of the height difference H is $h1 < H \leq h2$, rotating the first blade 332 relative to the first hub 331 to $30° < a \leq 50°$, with the rotational speed of the first impeller 330 being 1500rpm-2500rpm;

under a condition that the value range of the height difference H is $h2 < H \leq h3$, rotating the first blade 332 relative to the first hub 331 to $0° < a \leq 20°$, with the rotational speed of the first impeller 330 being 2500rpm-3500rpm.

According to the control method provided by the embodiment of the present application, through the above settings, the angle of the first blade 332 relative to the first hub 331 and the rotational speed of the first impeller 330 can be matched according to different height differences, so as to quickly adjust the attitude of the floating support foundation 200 and meet the optimal angle requirements of the wind turbine in which the floating support foundation 200 is located.

The specific values of h1, h2, h3 can be set according to the wind turbine model and the adjustment accuracy requirements, as long as it can ensure the attitude adjustment of the wind turbine, enabling the wind turbine to always work at a relatively optimal angle.

In some optional embodiments, according to the control method provided by the embodiment of the present application, after step S400, the control method further includes:

acquiring the current power information of the wind turbine;

under a condition that the current power information continuously remains below the first threshold for a preset period of time, controlling the first impeller 330 in the stabilization device 300 connected to the floating column 210 to perform a reverse action, so as to cause that the tilt angle information of the floating support foundation 200 returns to the preset range.

The initial state can be understood as the state immediately before the tilt angle information exceeded the preset range.

In some optional embodiments, based on the orientation state of the wind rotor, the rotational speed of the first impeller 330 of the stabilization device 300 can first be reduced, then the first blades 332 can be feathered (returned to 90°), and finally the power source can be cut off, stopping the movement of the first blades 332 until the floating support foundation 200 enters a reset state.

Exemplarily, under a condition that the angle a between the incoming wind X and the reference wind direction Y is 90°, during the restoration to the initial state, it can be completed by the coordinated motion of the stabilization devices 300 connected to the second upper floating column 212a and the second lower floating column 212b. At this time, it is necessary to simultaneously activate the stabilization devices connected to the second upper floating column 212a and the second lower floating column 212b, and control the first blades 332 of the stabilization devices 300 connected to the second upper floating column 212a and the second lower floating column 212b to rotate forward, causing the second upper floating column 212a and the second lower floating column 212b to float upward, so that the tilt angle θ returns to within the preset threshold range.

Of course, under a condition that the angle a between the incoming wind X and the reference wind direction Y is 90°, during the restoration to the initial state, the rotational speed of the first impellers 330 of the stabilization devices 300 connected to the second upper floating column 212a and the second lower floating column 212b can also be reduced, then the first blades 332 can be feathered (returned to 90°), and finally the power source can be cut off, stopping the movement of the first blades 332 until the wind turbine enters a reset state.

The operation methods for other orientation states are the same as above and will not be repeated here.

The wind turbine provided by the embodiment of the present application further includes a controller configured to: acquire current power information of the wind turbine; under a condition that the current power information continuously exceeds a first threshold for a preset period of time, acquire tilt angle information of the floating support foundation 200; under a condition that the tilt angle information exceeds a preset range, determine rotation direction information of the first impeller 330 of the stabilization device 300 based on an incoming wind direction; control the drive assembly 320 to drive the first impeller 330 to rotate according to the rotation direction information, so as to adjust the tilt angle information of the floating support foundation 200 to the preset range.

Optionally, the controller can be configured to execute the steps corresponding to the control method provided in the various embodiments described above, which will not be repeated here.

The wind turbine provided by the embodiment of the present application can have a controller that is a separately set control cabinet, or of course, integrated into the main controller of the wind turbine.

The wind turbine provided by the embodiment of the present application, by providing a controller, can be used to execute the control method provided in the various embodiments described above, facilitating the control of the floating support foundation 200, enabling it to control and adjust the corresponding stabilization devices 300 according to the incoming wind, the current attitude, and the target attitude, thereby ensuring the overall power generation efficiency of the wind turbine.

Although the present application has been described with reference to preferred embodiments, various improvements can be made and components can be replaced with equivalents without departing from the scope of the present application. In particular, as long as there is no structural conflict, the various technical features mentioned in the various embodiments can be combined in any manner. The present application is not limited to the specific embodiments disclosed herein but includes all technical solutions falling within the scope of the claims.

**Claims**

1. A floating support foundation capable of being disposed in seawater and used to support a tower, wherein the floating support foundation comprises:

   a floating main body comprising n floating columns spaced apart around a first axis and connecting bodies connecting every adjacent two of the floating columns, n≥3, the n floating columns comprising one first floating column and n-1 second floating columns, and the first floating column being used for connecting and supporting the tower;
   stabilization devices, each of the second floating columns being connected to a respective one of the stabilization devices, the stabilization device comprising a drive assembly, a first impeller, and a base connected to the second floating column, the base having an inner cavity, and a first opening and a second opening communicating with the inner cavity, the first opening, the inner cavity, and the second opening forming a flow channel for the seawater, the first impeller being disposed in the inner cavity, the drive assembly driving the first impeller to rotate and causing the seawater to flow within the flow channel, so as to adjust the second floating column connected to the stabilization device to float upward or sink downward.

2. The floating support foundation according to claim 1, wherein the base as a whole is cylindrical, the base has an end wall disposed opposite to a bottom wall of the second floating column in a first direction and a side wall disposed surrounding the end wall, the end wall and the side wall enclose and form the inner cavity, the bottom wall closes the inner cavity, the first opening is disposed on the end wall, and the second opening is disposed on the bottom wall.

3. The floating support foundation according to claim 2, wherein connecting lines between centers of the floating columns as a whole form a regular polygon, and the base of each of the stabilization devices is coaxially disposed with the second floating column connected to the stabilization device.

4. The floating support foundation according to claim 2, wherein along the first direction, a radial dimension of the side wall first decreases and then increases.

5. The floating support foundation according to claim 1, wherein the drive assembly comprises a drive motor, a gearbox, and a drive shaft, an input end of the gearbox is connected to the drive motor and an output end of the gearbox is connected to the drive shaft, and the first impeller is connected to the drive shaft.

6. The floating support foundation according to claim 5, wherein the second floating column has a hollow cavity, the drive motor and the gearbox are located within the hollow cavity, the drive shaft is inserted through the bottom wall of the second floating column and connected to the output end of the gearbox, and the drive shaft is in dynamic sealing cooperation with the bottom wall.

7. The floating support foundation according to claim 1, wherein the drive assembly comprises a direct drive motor and a drive shaft, the direct drive motor is connected to at least one of the bottom wall of the second floating column and the base and comprises a rotor and a stator that rotate in cooperation, the drive shaft is coaxially disposed with the direct drive motor and connected to the rotor, and the first impeller is connected to the drive shaft.

8. The floating support foundation according to claim 1, wherein the first impeller comprises a first hub, a plurality of first blades, and a pitch system, the first hub is connected to the drive assembly, the plurality of first blades are spaced apart around a circumference of the first hub and connected to the first hub through the pitch system, so as to adjust a pitch angle of the first blades.

9. The floating support foundation according to claim 1, wherein the stabilization device further comprises a flow straightening member disposed in the inner cavity and connected to the base, the flow straightening member is disposed between the first opening and the first impeller, so as to straighten a flow direction of the seawater entering from the first opening.

10. The floating support foundation according to claim 9, wherein the flow straightening member comprises a second hub and a plurality of second blades, the plurality of second blades are spaced apart around a circumference of the second hub and connected to the second hub, an end of the second blade away from the second hub is connected to the base, and a flow straightening hole is formed between adjacent two of the second blades.

11. A wind turbine, comprising:

   the floating support foundation according to any of claims 1 to 10;
   a wind turbine main body disposed on the first floating column, the wind turbine main body comprising a tower connected to the first floating column, a nacelle disposed on the tower, and a wind rotor disposed on the nacelle.

12. The wind turbine according to claim 11, further comprising a controller configured to:
   acquire current power information of the wind turbine; under a condition that the current power information continuously exceeds a first threshold for a preset period of time, acquire tilt angle information of the floating support foundation; under a condition that the tilt angle information exceeds a preset range, determine rotation direction information of the first impeller of the stabilization device based on an incoming wind direction; control the drive assembly to drive the first impeller to rotate according to the rotation direction information, so as to adjust the tilt angle information of the floating support foundation to the preset range.

13. A control method for the wind turbine according to claim 11, comprising:

   acquiring current power information of the wind turbine;

under a condition that the current power information continuously exceeds a first threshold for a preset period of time, acquiring tilt angle information of the floating support foundation;

under a condition that the tilt angle information exceeds a preset range, determining rotation direction information of the first impeller of the stabilization device based on an incoming wind direction;

controlling the drive assembly to drive the first impeller to rotate according to the rotation direction information, so as to adjust the tilt angle information of the floating support foundation to the preset range.

14. The control method according to claim 13, wherein the rotation direction information comprises forward rotation and reverse rotation;

under a condition that the first impeller of the stabilization device rotates forward, the stabilization device provides a float upward driving force to the second floating column connected to the stabilization device;

under a condition that the first impeller of the stabilization device rotates in reverse, the stabilization device provides a sink downward driving force to the second floating column connected to the stabilization device.

15. The control method according to claim 14, wherein the number of the second floating columns is two, the step of under a condition that the tilt angle information exceeds the preset range, determining the rotation direction information of the first impeller of the stabilization device based on the incoming wind direction comprises:

under a condition that the tilt angle information exceeds the preset range, controlling the two stabilization devices to synchronously rotate forward, synchronously rotate in reverse, or one to rotate forward and the other to rotate in reverse, based on an angle between the incoming wind direction and a reference wind direction.

16. The control method according to claim 13, wherein the first impeller comprises a first hub, a plurality of first blades, and a pitch system, the plurality of first blades are spaced apart around a circumference of the first hub and connected to the first hub through the pitch system, the method further comprises:

determining at least one of rotational speed information of the first impeller and angle information between the first blade and the first hub based on a height difference between a draft of the second floating column connected to the stabilization device and a set waterline;

controlling the drive assembly to drive the first impeller to rotate based on the at least one of the rotational speed information and the angle information, so as to adjust the tilt angle information of the floating support foundation to the preset range.

17. The control method according to claim 16, wherein a rotation angle a of the first blade relative to the first hub satisfies $0° < a \leq 90°$, the step of determining at least one of the rotational speed information of the first impeller and the angle information between the first blade and the first hub based on the height difference between the draft of the second floating column connected to the stabilization device and the set waterline comprises:

under a condition that a value range of the height difference H is $0 < H \leq h1$, rotating the first blade relative to the first hub to $a = 90°$, or rotating the first blade relative to the first hub to $50° < a \leq 60°$, with a rotational speed of the first impeller being 800rpm-1500rpm;

under a condition that the value range of the height difference H is $h1 < H \leq h2$, rotating the first blade relative to the first hub to $30° < a \leq 50°$, with the rotational speed of the first impeller being 1500rpm-2500rpm;

under a condition that the value range of the height difference H is $h2 < H \leq h3$, rotating the first blade relative to the first hub to $0° < a \leq 20°$, with the rotational speed of the first impeller being 2500rpm-3500rpm.

18. The control method according to claim 13, wherein after the step of controlling the drive assembly to drive the first impeller to rotate according to the rotation direction information, so as to adjust the tilt angle information of the floating support foundation to the preset range, the control method further comprises:

acquiring the current power information of the wind turbine;

under a condition that the current power information continuously remains below the first threshold for a preset period of time, controlling the first impeller in the stabilization device connected to the floating column to perform a reverse action, so as to cause that the tilt angle information of the floating support foundation returns to the preset range;

or,

acquiring the current power information of the wind turbine;

under a condition that the current power information continuously remains below the first threshold for a preset period of time, reducing a rotational speed of the first impeller in the stabilization device connected to the second floating column;

feathering the first impeller of the stabilization device and stopping the rotation of the first impeller, so as to adjust the floating support foundation back to an initial state.

**Fig. 1**

**Fig. 2**

210(212)

300

220

220

210(211)

220

300

210(212)

**Fig. 3**

**Fig. 4**

**Fig. 5**

acquiring current power information of the wind turbine — S100

under a condition that the current power information continuously exceeds a first threshold for a preset period of time, acquiring tilt angle information of the floating support foundation — S200

under a condition that the tilt angle information exceeds a preset range, determining rotation direction information of the first impeller of the stabilization device based on an incoming wind direction — S300

controlling the driving member to drive the first impeller to rotate according to the rotation direction information, so as to adjust the tilt angle information of the floating support foundation to the preset range — S400

**Fig. 6**

**Fig. 7**

300

210 (212a)

220

220

210 (211)

220

300

210 (212b)

Y

a

X

**Fig. 8**

300

210 (212a)

220

220

210 (211)

220

300

210 (212b)

Y

a

X

**Fig. 9**

210 (212a)

300

220

210 (211)

220

220

300

210 (212b)

Y

X

a

**Fig. 10**

210 (212a)

300

220

210 (211)

220

220

300

210 (212b)

Y

**Fig. 11**

## INTERNATIONAL SEARCH REPORT

| International application No. |
|---|
| **PCT/CN2023/135935** |

| A. | CLASSIFICATION OF SUBJECT MATTER |
|---|---|

F03D13/20(2016.01)i; F03D13/25(2016.01)i; E02D27/42(2006.01)i; B63B35/44(2006.01)i; B63B39/00(2006.01)i; B63B39/14(2006.01)i; B63B43/04(2006.01)i

According to International Patent Classification (IPC) or to both national classification and IPC

| B. | FIELDS SEARCHED |
|---|---|

Minimum documentation searched (classification system followed by classification symbols)

IPC: F03D E02D B63B

Documentation searched other than minimum documentation to the extent that such documents are included in the fields searched

Electronic data base consulted during the international search (name of data base and, where practicable, search terms used)

CNABS; CNTXT; VEN; CNKI; USTXT; EPTXT; WOTXT: 漂浮, 支撑, 立柱, 稳定, 叶轮, 开口, 功率, 阈值, 转向, float, support, sustain, spar, stabiliz+, impeller, open+, power, threshold, turn+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116928031 A (GOLDWIND SCIENCE & TECHNOLOGY CO., LTD. et al.) 24 October 2023 (2023-10-24)<br>description, paragraphs [0065]-[0171], and figures 1-11 | 1-18 |
| Y | CN 115614228 A (XINJIANG GOLDWIND SCIENCE & TECHNOLOGY CO., LTD.) 17 January 2023 (2023-01-17)<br>description, paragraphs [0057]-[0161], and figures 1-10 | 1-18 |
| Y | KR 101709126 B1 (KOREA INSTITUTE OF ENERGY RESEARCH) 22 February 2017 (2017-02-22)<br>description, paragraphs [0023]-[0074], and figures 1-7 | 1-18 |
| Y | CN 115949554 A (XINJIANG GOLDWIND SCIENCE & TECHNOLOGY CO., LTD.) 11 April 2023 (2023-04-11)<br>description, paragraphs [0074]-[0196], and figures 1-10 | 1-18 |
| Y | CN 113513452 A (CHINA HUANENG GROUP CLEANING ENERGY TECHNOLOGY RESEARCH INSTITUTE CO., LTD. et al.) 19 October 2021 (2021-10-19)<br>description, paragraphs [0034]-[0058], and figures 1-5 | 1-18 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **19 December 2023** | **20 January 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/135935**

C.　DOCUMENTS CONSIDERED TO BE RELEVANT

| Category* | Citation of document, with indication, where appropriate, of the relevant passages | Relevant to claim No. |
|---|---|---|
| A | CN 102495637 A (GAO BINGTUAN) 13 June 2012 (2012-06-13)<br>entire document | 1-18 |

Form PCT/ISA/210 (second sheet) (July 2022)

## INTERNATIONAL SEARCH REPORT
### Information on patent family members

International application No.

**PCT/CN2023/135935**

| Patent document cited in search report | | | Publication date (day/month/year) | Patent family member(s) | | | Publication date (day/month/year) |
|---|---|---|---|---|---|---|---|
| CN | 116928031 | A | 24 October 2023 | None | | | |
| CN | 115614228 | A | 17 January 2023 | None | | | |
| KR | 101709126 | B1 | 22 February 2017 | None | | | |
| CN | 115949554 | A | 11 April 2023 | None | | | |
| CN | 113513452 | A | 19 October 2021 | None | | | |
| CN | 102495637 | A | 13 June 2012 | CN | 102495637 | B | 05 November 2014 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310818984